# EUROPÄISCHE PATENTSCHRIFT

(11) **EP 4 584 146 B1**
(45) Veröffentlichungstag und Bekanntmachung des Hinweises auf die Patenterteilung: **26.08.2026**
(21) Anmeldenummer: 23772087.5
(22) Anmeldetag: 01.09.2023
(51) Int. Cl.: B62D 55/28

(54) **TRAKTIONSHILFE**
TRACTION AID
AIDE À LA TRACTION

(30) Priorität: 05.09.2022 AT 506722022
(43) Veröffentlichungstag der Anmeldung: 16.07.2025
(73) Patentinhaber: HETTEGGER, Rupert, Christoph, 5611 Großarl (AT)
(72) Erfinder: HETTEGGER, Rupert, Christoph, 5611 Großarl (AT)
(74) Vertreter: Fabian, Ferdinand
(86) Internationale Anmeldenummer: PCT/AT2023/060306
(87) Internationale Veröffentlichungsnummer: WO 2024/050584

(56) Entgegenhaltungen:
- EP-A1- 3 708 473
- WO-A1-2020/101508
- US-A1- 2022 258 817

## Beschreibung

Die Erfindung betrifft eine Traktionshilfe für eine Maschine mit einer Raupenkette, insbesondere für ein Raupenfahrzeug mit Gummiketten, umfassend ein Auflageelement, auf dem ein Traktionselement angeordnet ist, wobei an dem Auflageelement zumindest ein erstes Winkelelement und zumindest ein zweites Winkelelement angeordnet sind, die jeweils einen Verbindungsschenkel und einen Anlageschenkel aufweisen, wobei zumindest eines der beiden Winkelelemente mit dem Auflageelement lösbar verbunden ist, wozu das Auflageelement einen Anbindungsabschnitt aufweist.

Weiter betrifft die Erfindung eine Raupenkette für eine Maschine, die eine Oberseite aufweist, die bevorzugt eine Profilierung mit Erhebungen aufweist, sowie mit zumindest einer Traktionshilfe, die auf der Oberseite, bevorzugt zwischen zwei Erhebungen der Profilierung, angeordnet ist.

Die Bodenhaftung von Raupenfahrzeugen, wie beispielsweise Baggern, leidet bei schlechten Bodenverhältnissen bzw. steilen Geländen, weil sich die Zwischenräume zwischen den vorstehenden Querstegen der Raupenkette innerhalb kurzer Zeit mit aufgenommenem Material füllen und dann nicht mehr in den Boden eindringen, sodass sie unwirksam werden. Um diesem Umstand Rechnung zu tragen, wurden im Stand der Technik bereits Steighilfen vorgeschlagen. So ist beispielsweise aus der DE 20 2012 100 868 U1 eine Gleitschutzvorrichtung für eine Raupenkette bekannt, deren Kettenplatten vorstehende, quer zur Kettenlängsrichtung verlaufende Stege aufweisen, mit Trägern für über die Stege vorstehende Stollen zwischen je zwei benachbarten Stegen ausgewählter Kettenplatten, wobei die Träger jeweils zwei die Seitenränder der Kettenplatten umgreifende, miteinander lösbar verbundene, U-förmige Halterungen bilden. Die U-förmigen Halterungen der Träger umfassen einander in Trägerlängsrichtung der Höhe nach überlappende und im Überlappungsbereich mit gegen die zugehörige U-förmige Halterung abfallenden Keilflächen aneinanderliegende Schenkel, die im Überlappungsbereich über eine Langlochverbindung verschraubt sind.

Die AT 520750 A4 beschreibt eine Steighilfe für eine Maschine mit einer Raupenkette, umfassend einen Grundkörper, der aus miteinander an einem Überlappstoß verbundenen Profilelementen gebildet ist, wobei die Profilelemente ein Trägerprofil aufweisen, auf dem ein Steighilfe-Profilelement angeordnet ist, das über das Trägerprofil vorragt, und wobei die Profilelemente des Grundkörpers im Bereich des Überlappstoßes formschlüssig miteinander verbunden sind, wobei für die Ausbildung der formschlüssigen Verbindung der Profilelemente zumindest eines dieser Profilelemente stirnseitig eine Ausnehmung aufweist und die Profilelemente im Bereich dieser Ausnehmung ineinandergeschoben sind. Durch das Ineinanderschieben der beiden Profilelemente weist der dadurch erzeugte Formschluss eine höhere Quersteifigkeit auf, wodurch die Steighilfe, nachdem sie mit ihrer Längserstreckung quer zur Fahrtrichtung montiert ist, höheren Kräften in Fahrtrichtung ausgesetzt werden kann.

Die AT 524130 A4 betrifft eine Steighilfe für eine Maschine mit einer Raupenkette, umfassend ein erstes und ein zweites Winkelelement, wobei die beiden Winkelelemente miteinander verbunden sind, und jeweils einen abgewinkelten Bereich aufweisen, der die Raupenkette umgreift, wobei zumindest eines der Winkelelemente ein Fixierelement aufweist, wobei die Raupenkette zwischen dem Fixierelement und dem das Fixierelement aufweisenden Winkelelement anordenbar ist.

Die US 2022/258817 A1 beschreibt eine Traktionshilfe, die an einer Gummikette befestigt werden kann. Die Traktionshilfe umfasst eine erste Montageplatte, eine zweite Montageplatte, ein Einstellelement und ein Traktionselement. Die zweite Montageplatte umfasst mehrere Schlitze in denen Führungselemente der ersten Einstellplatte verschiebbar aufgenommen sind. Die erste Montageplatte und die zweite Montageplatte sind entlang des Einstellelements miteinander verbunden.

Aus der WO 2020/101508 A1 ist eine Vorrichtung zur Verwendung mit einer durchgehenden Kette eines Kettenfahrzeugs bekannt, um die Traktion des Fahrzeugs zu verbessern, wobei die Kette eine Lauffläche mit Aussparungen aufweist. Die Vorrichtung umfasst eine erste Komponente und eine zweite Komponente, wobei die erste Komponente und die zweite Komponente jeweils Folgendes aufweisen: einen länglichen Körper mit einem ersten Schlitz und einem zweiten Schlitz an oder in der Nähe eines Endes des länglichen Körpers und einem dritten Schlitz an oder in der Nähe des anderen Endes des länglichen Körpers, wobei jeder der Schlitze zur Aufnahme eines Befestigungselements konfiguriert ist; eine Vielzahl von Bodeneingriffsmerkmalen, die sich vom länglichen Körper nach oben erstrecken; eine U-förmige Halterung mit einem sich nach außen erstreckenden Abschnitt mit einer Schieneneingriffsfläche zum Eingriff mit einer Oberseite der Schiene, einem sich nach unten erstreckenden Abschnitt und einem sich nach innen erstreckenden Abschnitt mit einer Schieneneingriffsfläche zum Eingriff mit einer Unterseite der Schiene; und ein erstes Befestigungselement und ein zweites Befestigungselement; wobei die Vorrichtung eine erste Konfiguration aufweist, in der sich das erste Befestigungselement durch den ersten Schlitz der ersten Komponente und den dritten Schlitz der zweiten Komponente erstreckt und sich das zweite Befestigungselement durch den ersten Schlitz der zweiten Komponente und den dritten Schlitz der ersten Komponente erstreckt , wobei die Befestigungselemente die ersten und zweiten Komponenten aneinander befestigen, und eine zweite Konfiguration, bei der sich das erste Befestigungselement durch den zweiten Schlitz der ersten Komponente und den dritten Schlitz der zweiten Komponente erstreckt und sich das zweite Befestigungselement durch den zweiten Schlitz der zweiten Komponente erstreckt und der dritte Schlitz der ersten Komponente, wobei die Befestigungselemente die erste und zweite Komponente aneinander befestigen.

Die EP 3 708 473 A1 1 beschreibt eine Steighilfe für eine Maschine mit einer Raupenkette, umfassend ein erstes und ein zweites Winkelelement, wobei die beiden Winkelelemente mit einem Verbindungselement miteinander verbunden sind, und das Verbindungselement beweglich miteinander verbundene Elemente umfasst oder daraus besteht.

Der vorliegenden Erfindung liegt die Aufgabe zugrunde, eine Traktionshilfe zu schaffen, die insbesondere auf einer Gummilaufkette einfach anordenbar ist.

Die Aufgabe der Erfindung wird mit der eingangs genannten Traktionshilfe gelöst, bei der vorgesehen ist, dass das zumindest eine lösbar verbundene Winkelelement und das Auflageelement im Verbindungsbereich einander überlappend angeordnet sind, und der Anbindungsabschnitt hülsenförmig ausgebildet ist und das zumindest eine lösbar verbundene Winkelelement in den Anbindungsabschnitt eingeschoben ist, oder dass das zumindest eine lösbar verbundene Winkelelement einen hülsenförmigen Abschnitt aufweist, in den der Anbindungsabschnitt eingeschoben ist, wobei dieser hülsenförmige Abschnitt den Verbindungsschenkel des Winkelelements bildet.

Weiter wird die Aufgabe der Erfindung mit der eingangs genannten Raupenkette gelöst, die die erfindungsgemäße Traktionshilfe aufweist.

Von Vorteil ist dabei, dass durch die Überlappung die Verbindung zwischen dem Auflageelement und dem Winkelelement verbessert werden kann. Dies wiederum ermöglicht eine einfachere Ausbildung des Auflageelements, sodass dieses besser an die Geometrie der Raupenkette anpassbar ist. Insgesamt kann damit eine Ausgestaltung der Traktionshilfe erreicht werden, die einfacher auf der Raupenkette zu montieren ist.

Zur weiteren Vereinfachung der Montage der Traktionshilfe ist vorgesehen, dass der Anbindungsabschnitt hülsenförmig ausgebildet ist und dass das zumindest eine lösbar verbundene Winkelelement in den Anbindungsabschnitt eingeschoben ist. Durch das vollumfängliche Umgreifen des Winkelelementes mit dem Anbindungsabschnitt kann neben der verbesserten Belastbarkeit des Verbindungsbereichs auch die Montage vereinfacht werden, da die Lage des Winkelelements am Anlageelement durch die Hülsenform einfacher vordefiniert werden kann.

Aus den gleichen Gründen kann alternativ vorgesehen sein, dass das zumindest eine lösbar verbundene Winkelelement einen hülsenförmigen Abschnitt aufweist, in den der Anbindungsabschnitt eingeschoben ist.

Eine weitere Vereinfachung der Montage der Traktionshilfe kann erreicht werden, wenn das erste oder das zweite Winkelelement einstückig mit dem Auflageelement ausgebildet ist. Es kann damit in einem ersten Montageschritt das Auflageelement auf die Raupenkette aufgeschoben werden, womit bereits eine erste Position der Traktionshilfe lose fixiert werden kann.

Zur Verbesserung der Anpassbarkeit der Traktionshilfe an unterschiedlichste Geometrien von Raupenketten kann entsprechend einer Ausführungsvariante der Erfindung vorgesehen sein, dass das Auflageelement zwei miteinander verbundene und in einer Längsrichtung des Auflageelements relativ zueinander verschiebbare Auflageelementteile aufweist.

Entsprechend einer Ausführungsvariante der Erfindung kann vorgesehen sein, dass das zumindest eine Winkelelement ein Anlageelement für die Anlage an der Raupenkette aufweist, wobei eine an die Raupenkette anlegebare Anlagefläche des Anlageelements eine konvexe Wölbung aufweist. Durch die Wölbung kann die Anlagefläche des Winkelelements an der Raupenkette verringert werden, womit eine höhere Flächenpressung erreicht werden kann. Durch die höhere Flächenpressung kann die Montagesicherheit erhöht werden, sodass die Traktionshilfe insbesondere bei Raupenketten aus Gummi mit relativ glatten Oberflächen im Bereich der Anlage der Traktionshilfe eine verbesserte Kraftübertragung ermöglicht. Zudem kann damit die Umlenkbarkeit der Raupenkette bei montierten Traktionshilfen verbessert werden.

Nach einer anderen Ausführungsvariante der Erfindung kann vorgesehen sein, dass zwei einander gegenüberliegende Seitenwände des Anbindungsabschnitts mit abgewinkelten Abschnitten ausgebildet sind, wobei sich die abgewinkelten Abschnitte bis auf die Oberfläche des Auflageelements erstrecken, auf der das Traktionselement angeordnet ist. Einerseits kann damit die Belastbarkeit der Verbindung zwischen Auflageelement und Anbindungsabschnitt verbessert werden, wenn der Anbindungsabschnitt mehrteilig ausgebildet ist. Als Nebeneffekt können damit aber auch zusätzliche Traktionselemente auf der Traktionshilfe bereitgestellt werden.

Die Montage der Traktionshilfe auf der Raupenkette kann vereinfacht werden, wenn gemäß einer weiteren Ausführungsvariante der Erfindung das zumindest eine Winkelelement einen Winkel zwischen den winkelig zueinander angeordneten Abschnitten aufweist, der größer als 90 ° und kleiner als 110 ° ist. Mit dieser Winkelausbildung kann das Aufschieben des Winkelelements auf die Raupenkette vereinfacht werden. Zudem kann damit auch die Flächenpressung, die das Winkelelement auf die Raupenkette ausübt, durch Reduktion der Anlagefläche erhöht werden. Dies wiederum kann ebenfalls zu einer verbesserten Kraftübertragung beitragen, wie dies voranstehend bereits zur Ausführungsvariante mit der gewölbten Oberfläche ausgeführt wurde.

Nach einer anderen Ausführungsvariante der Erfindung kann vorgesehen sein, dass beide Winkelelemente gleich ausgebildet sind und das Auflageelement zwei Anbindungsabschnitte aufweist. Es ist damit eine bessere Anpassung an unterschiedliche Materialdicken der Raupenkette, beispielsweise bedingt durch Abnutzung, erreichbar, womit die Haltefestigkeit der Traktionshilfe auf der Raupenkette verbessert werden kann.

Zum besseren Verständnis der Erfindung wird diese anhand der nachfolgenden Figur näher erläutert.

Es zeigen jeweils in vereinfachter, schematischer Darstellung:
- Fig. 1: Einen Ausschnitt aus einer Raupenkette in Draufsicht, mit einer darauf angeordneten Traktionshilfe;
- Fig. 2: Eine Traktionshilfe auf eine Raupenkette im Längsschnitt;
- Fig. 3: Die Traktionshilfe nach Fig. 2 in Schrägansicht;
- Fig. 4: Die Traktionshilfe nach Fig. 2 in Draufsicht;
- Fig. 5: Die Traktionshilfe nach Fig. 2 in Seitenansicht;
- Fig. 6: Einen Ausschnitt aus der Traktionshilfe nach Fig. 2 im Längsschnitt;
- Fig. 7: Einen Ausschnitt aus der Traktionshilfe nach Fig. 2 im Querschnitt;
- Fig. 8: Einen Ausschnitt aus einer Ausführungsvariante einer Traktionshilfe in Frontansicht;
- Fig. 9: Einen Ausschnitt aus einer anderen Ausführungsvariante einer Traktionshilfe im Längsschnitt;
- Fig.: 10Einen Ausschnitt aus einer weiteren Ausführungsvariante einer Traktionshilfe im Längsschnitt.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

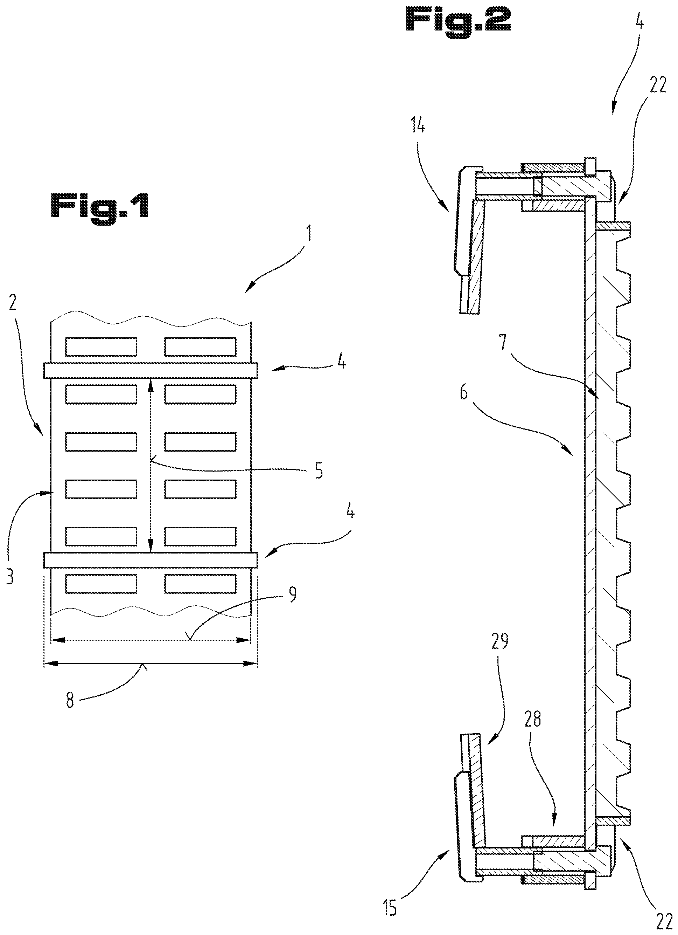

In Fig. 1 ist eine Raupenkette 1 (auch als Gleiskette oder Gummikette oder Gummiraupe bezeichenbar) dargestellt.

Die Raupenkette 1 ist für einer Maschine, wie beispielsweise einen Bagger oder eine Pistenraupe, vorgesehen. Derartige Raupenketten 1 können miteinander über Gelenkbolzen gelenkig verbundene Kettenglieder und auf diesen Kettengliedern aufgeschraubte Kettenplatten aufweisen. Die Kettenplatten weisen an einer Oberseite, die mit dem Boden, auf dem die Maschine steht, in Berührung kommt, bevorzugt eine Profilierung 2 mit Erhebungen auf, beispielsweise mit quer und/der schräg zur Kettenlängsrichtung verlaufenden, vorstehenden Stegen 3 (auch als Stollen bezeichenbar). Die Profilierung 2 kann auch anders als dargestellt ausgeführt sein, sodass die Darstellung in Fig. 1 nur beispielhaften Charakter hat.

Bevorzugt ist die Raupenkette 1 nach der Erfindung als umlaufende, einteilige Gummispur ausgebildet ist, also ohne einzelne, miteinander verbundene Kettenglieder. Die Profilierung 2 ist dann einteilig mit der Raupenkette 1 ausgebildet.

Prinzipiell sind derartige Raupenketten 1 aus dem Stand der Technik bekannt, sodass zu weiteren Details betreffend den Aufbau der Raupenkette 1 auf den einschlägigen Stand der Technik, wie beispielsweise die eingangs genannten DE 20 2012 100 868 U1 und AT 524130 A4, verwiesen sei.

Bei aufgeweichten oder gefrorenen Böden kann die Raupenkette 1 unter Umständen nur einen unzureichenden Halt aufweisen. Zur Verbesserung des Halts kann eine Traktionshilfe 4 (auch als Steighilfe bezeichenbar) an der Raupenkette 1 montiert werden. Die Traktionshilfe 4 kann dazu zwischen zwei Erhebungen der Profilierung 2, beispielsweise zwischen zwei unmittelbar benachbarten, quer zur Fahrtrichtung verlaufenden Stegen 3 der Profilierung 2, angeordnet werden. Je nach Bedarf können ein oder mehrere derartige Traktionshilfen 4 angeordnet werden. Bei mehreren Traktionshilfen 4 sind diese bevorzugt in einem gleichbleibenden Abstand 5 zueinander angeordnet.

In den Fig. 2 bis 7 ist eine bevorzugte Ausführungsvariante der Traktionshilfe 4 dargestellt.

Es sei an dieser Stelle erwähnt, dass an der Raupenkette 1 üblicherweise mehr als eine Traktionshilfe 4 montiert wird. Da vorzugsweise alle Traktionshilfen 4 gleich ausgebildet sind, wird in dieser Beschreibung nur eine Traktionshilfe 4 beschrieben. Die Ausführungen zur Traktionshilfe 4 können auch auf die weiteren Traktionshilfen 4 der Raupenkette 1 angewandt werden.

Die Traktionshilfe 4 umfasst ein Auflageelement 6, auf dem ein Traktionselement 7 angeordnet ist.

Im einfachsten Fall kann das Auflageelement 6 plattenförmig, insbesondere vollständig eben, ausgebildet sein. Beispielsweise kann das Auflageelement 6 aus einem Flachstahl gefertigt sein, z.B. durch Ausstanzen aus einer entsprechend größeren Platine.

Das Auflageelement 6 kann aber auch anders ausgeführt sein, beispielsweise in Form eines Profilelementes, etc. Weiter kann das Auflageelement 6 auch mit einem anderen Verfahren, z.B. einem Gussverfahren, hergestellt werden.

Das Auflageelement 6 ist zur Anlage an der Raupenkette 1 vorgesehen, insbesondere zur direkten Anlage. Das Auflageelement 6 weist vorzugsweise eine Längserstreckung 8 auf, die größer ist als eine Breite 9 der Raupenkette 1 (in Fig. 1 dargestellt). Vorzugsweise überragt das Auflageelement 6 beidseitig die Raupenkette 1, wie dies aus Fig. 1 ersichtlich ist.

Es sind aber auch andere Ausgestaltungen der Traktionshilfe 4 möglich, bei der die Längserstreckung 8 des Auflageelements 6 gleich oder kleiner ist als die Breite 9 der Raupenkette 1.

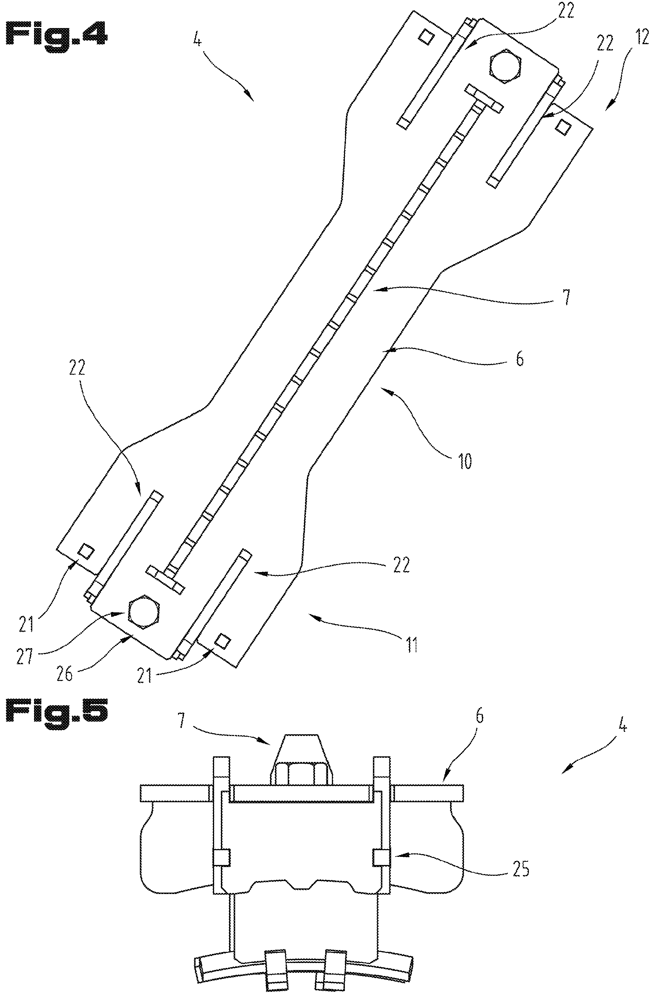

Das Auflageelement 9 weist einen Mittelbereich 10 auf, an den jeweils ein Endbereich 11, 12 anschließt. Die Endbereiche 11, 12 können - in Draufsicht auf die Traktionshilfe 4 betrachtet - breiter ausgeführt sein als der Mittelteil 10. Die Verbreiterung kann sprungartig ausgebildet sein. Es ist aber auch möglich, wie dies z.B. aus Fig. 4 ersichtlich ist, dass die Verbreiterung in Übergangsbereichen zwischen dem Mittelbereich 10 und den Endbereichen 11, 12 stetig zunehmend, insbesondere linear, ausgebildet sein kann. In Draufsicht betrachtet können die Übergangsbereiche z.B. trapezförmig ausgebildet sein. Es sind aber auch andere geometrische Ausführungen möglich. Mit dieser Ausbildung mit den breiteren Endbereichen 11, 12 kann die Anlage der Traktionshilfe 4 im die Raupenkette 1 umgreifenden Bereich für die Raupenkette 1 weniger belastend ausgeführt werden. Dies ist insbesondere von Vorteil, wenn die Raupenkette 1 aus Gummi besteht bzw. in diesem Bereich einen Gummi aufweist, an dem die Traktionshilfe 4 (unmittelbar) anliegt.

Das Auflageelement 6 kann über die gesamte Längserstreckung 8 betrachtet mit einer gleichbleibenden Dicke ausgebildet sein.

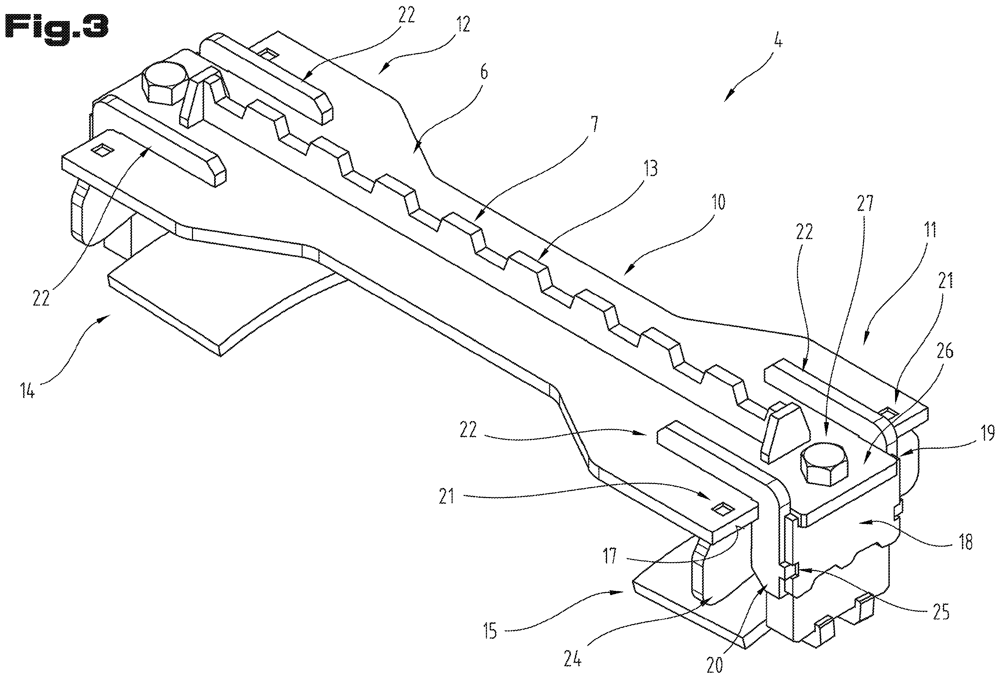

Das Traktionselement 7 ist vorzugsweise über zumindest 50 %, insbesondere zumindest 70 %, der Längserstreckung 8 des Auflageelements 6 sich durchgehend erstreckend ausgebildet. Vorzugsweise ist es einteilig ausgebildet. Das Traktionselement 7 ist mit dem Auflageelement 6 verbunden, insbesondere stoffschlüssig verbunden, vorzugsweise verschweißt. Insbesondere kann das Traktionselement 7 stegförmig ausgebildet sein. Bevorzugt liegt es mit einer Seitenstirnfläche auf dem Auflageelement 6 auf, wie dies aus Fig. 3 ersichtlich ist.

Das Traktionselement 7 ist insbesondere ebenfalls aus einem Flachmaterial und durch spanendes Bearbeiten hergestellt. Es kann auch nach einem anderen Verfahren, z.B. einem Gussverfahren, hergestellt worden sein. Es weist eine Profilierung mit Erhebungen 13 (auch als Krallen oder Zähne bezeichenbar) auf und überragt das Auflageelement 6 in vertikaler Richtung. Mithilfe dieser Profilierung, die im eingebauten Zustand der Traktionshilfe 4 auch die Profilierung 2 der Raupenkette 1 in vertikaler Richtung überragt, hat die Raupenkette 1 im Betrieb einen besseren Halt, da sie sich weiter in den Boden eingraben kann.

Es sei darauf hingewiesen, dass die in Fig. 3 dargestellte Form der Profilierung das Traktionselements 7 keinen einschränkenden Charakter hat, sondern auch anders ausgeführt sein kann, beispielsweise mit anstelle der trapezförmigen dreieckförmigen Erhebungen 13, etc. Weiter sind auch Mischformen von Erhebungen 13 möglich, sodass also die Erhebungen 13 unterschiedliche Geometrien haben können.

Die Abstände zwischen den Erhebungen 13 können alle gleich sein. Die Erhebungen 13 können aber auch in unterschiedlichen Abständen zueinander ausgebildet oder angeordnet sein.

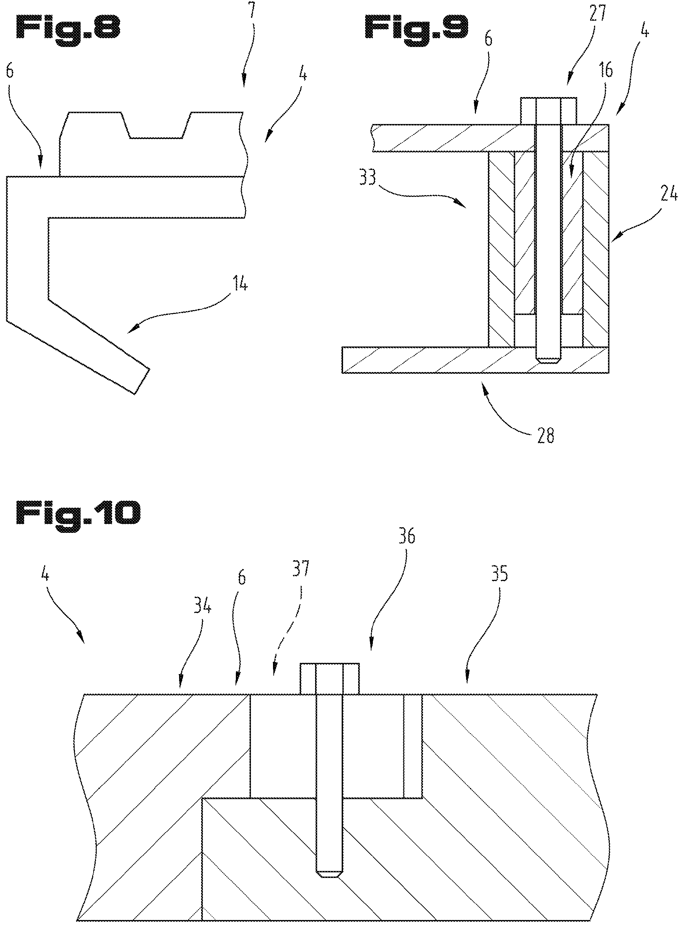

An dem Auflageelement 6 sind zumindest ein erstes Winkelelement 14 und zumindest ein zweites Winkelelement 15 angeordnet. In der Ausführungsvariante der Traktionshilfe 4 nach den Figuren 2 bis 5 sind beide Winkelelemente 14, 15 lösbar mit dem Auflageelement 6 verbunden. Für die lösbare Verbindung sind am Auflageelement 6 Anbindungsabschnitte 16 (auch als Anbindungselemente bezeichenbar) für die Anbindung der Winkelelemente 14, 15 an das Auflageelement 6 angeordnet. Wie jedoch Fig. 8 zeigt, besteht nach einer Ausführungsvariante der Traktionshilfe 4 die Möglichkeit, dass eines der beiden Winkelelemente 14, 15 einstückig mit dem Auflageelement 6 ausgebildet ist. Dazu kann das Auflageelement 6 beispielsweise entsprechend umgeformt werden, sodass das Auflageelement 6 in diesem Endbereich 11 oder 12 zumindest annährend u-förmig ausgebildet ist (in Frontansicht betrachtet).

In der bevorzugten Ausführungsvariante der Traktionshilfe 4 sind aber beide Winkelelement 14, 15 lösbar mit dem Auflageelement 6 verbunden. Zudem sind in der bevorzugten Ausführungsvariante beide Winkelelemente 14, 15 gleich ausgebildet und das Auflageelement 6 weist dementsprechend bevorzugt zwei gleich ausgebildete Anbindungsabschnitte 16 auf. Im Folgenden wird daher nur auf einen Anbindungsabschnitt 16 und ein Winkelelement 15 näher eingegangen. Es sei jedoch darauf hingewiesen, dass die Anbindungsabschnitte 16 und/oder die Winkelelemente 14,15 geometrisch auch unterschiedlich ausgestaltet sein können, solange sie deren zugeordnete übergeordnete Funktion, nämlich die Anbindung der Traktionshilfe 4 an die Raupenkette 1 erfüllen.

Im Bereich der Verbindung der Winkelelemente 14, 15 mit dem Anbindungselement 16 ist eine Überlappung zwischen dem Winkelelementen 14 bzw. 15 und dem zugehörigen Anbindungselement 16 ausgebildet. Der Überlappungsbereich kann ein- oder mehrwandig ausgeführt sein, beispielsweise in Form eine Flachprofils, eines L-Profils oder eines U-Profils.

Der Überlappungsbereich ist so ausgeführt, dass zumindest in einem Teilbereich der Überlappung, bevorzugt im gesamten Überlappungsbereich, eine vollumfängliche Überlappung ausgebildet ist.

Bevorzugt liegen der Anbindungsabschnitt 16 und das Winkelelement 14 bzw. 15 im Überlappungsbereich aneinander an bzw. sind in einem Abstand von zwischen 0,5 mm bis maximal 5 mm, insbesondere maximal 2 mm, vorzugsweise maximal 1 mm, zueinander angeordnet. Dies kann auf eine, mehrere oder alle Bereiche des Überlappungsbereichs, auch in Umfangsrichtung, zutreffen.

Der Anbindungsabschnitt 16 kann im Überlappungsbereich einen rechteckförmigen bzw. quadratischen oder generell polygonalen bzw. runden oder ovalen (lichten) Querschnitt aufweisen, der an den Querschnitt des Winkelelementes 14 oder 15 im Überlappungsbereich für dessen Aufnahme angepasst ist.

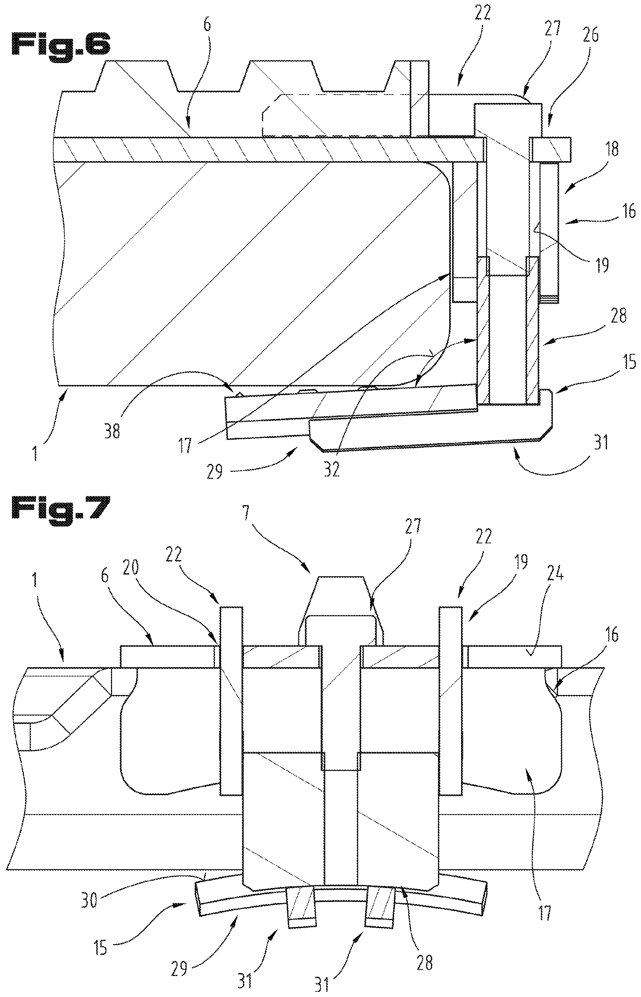

Für die vollumfängliche Überlappung des Anbindungsabschnitts 16 und des Winkelelements 14 bzw. 15 ist vorgesehen, dass der Anbindungsabschnitt 16 hülsenförmig ausgebildet ist und dass das zumindest eine lösbar verbundene Winkelelement 14 bzw. 15 in den Anbindungsabschnitt 16 eingeschoben angeordnet ist, wie dies aus Fig. 2 und in vergrößerter Darstellung aus den Fig. 6 und 7 zu ersehen ist. In die Fig. 6 und 7 ist zudem die Raupenkette 1 dargestellt, sodass aus diesen Figuren auch eine bevorzugte Anordnung der Traktionshilfe 4 an der Raupenkette ersichtlich ist.

Wie aus diesen Fig. 6 und 7 ersichtlich, kann der hülsenförmige Anbindungsabschnitt 16 bis zum Auflageelement 6 sich erstreckend ausgebildet sein. Er kann aber auch beabstandet zum Auflageelement 6 ausgebildet sein. Durch die Hülsenform wird es nicht nur möglich, das Winkelelement 14 oder 15 in den Anbindungsabschnitt 16 einzuschieben, sondern es kann damit bei gleichzeitig hoher Stabilität eine Höhenvariabilität zum Ausgleich von unterschiedlich dicken Raupenketten 1 ermöglicht werden. Dies kann durch unterschiedlich tiefes Eintauchen des Winkelelements 14 bzw. 15 in den Anbindungsabschnitt 16 erreicht werden. Damit wird zudem auch der Einsatz der Traktionshilfe 4 an unterschiedlichen Raupenkette 1 vereinfacht.

Der Anbindungsabschnitt 16 kann einteilig oder mehrteilig ausgeführt sein. In der einteiligen Ausbildung kann der Anbindungsabschnitt 16 zumindest im Überlappungsbereich als Hohlprofil ausgebildet sein, dass insbesondere mit dem Auflageelement 6 verbunden ist.

Generell kann der Anbindungsabschnitt 16 mit dem Auflageelement 6 durch eine stoffschlüssige und/oder formschlüssige und/oder reibschlüssige und/oder kraftschlüssige Verbindung verbunden sein. Vorzugsweise ist der Anbindungsabschnitt 16 zumindest stoffschlüssig mit dem Auflageelement 6 verbunden.

Auch für die Mehrteiligkeit können Profilelemente, wie Winkelprofile oder C-Profile, eingesetzt werden, um die Hülsenform des Anbindungsabschnittes 16 auszubilden. Vorzugsweise werden jedoch zur Ressourcenschonung flache Platinen, wie Flachstahlplatinen, verwendet, aus den die Seitenwände der Hülsenform ausgestanzt werden. Für die Ausführungsvariante der Traktionshilfe 4 nach den Fig. 2 bis 7 werden vier Wandelemente eingesetzt, nämlich eine Rückwand 17, eine Vorderwand 18 und eine erste und eine zweite Seitenwand 19, 20, die die Verbindung der Rückwand 17 mit der Vorderwand 18 herstellen.

Die Rückwand 17 ist jene Wand, die der Raupenkette 1 am nächsten ist, insbesondere an dieser anliegt. Sie kann mit dem Auflageelement 6 stoffschlüssig verbunden sein. Alternativ oder zusätzlich dazu kann eine formschlüssige Verbindung hergestellt sein, beispielsweise über ein Formschlusselement 21 oder mehrere Formschlusselemente 21, wie dies aus den Figuren 3 und 4 zu ersehen ist. Das zumindest eine Formschlusselement 21 kann ein Vorsprung sein, der eine Seitenfläche (bzw. Mantelfläche) der Rückwand 17 in Richtung auf das Auflageelement 6 vorspringend überragt und in einer der Form (den Querschnitt) des Formschlusselementes 21 angepassten Ausnehmung im Auflageelement 6 aufgenommen ist.

Die Seitenwände 19, 20 können sich, wie die Rückwand 17, ebenfalls bis zum Auflageelement 6 erstrecken und mit diesem und/oder der Rückwand 17 stoffschlüssig und/oder formschlüssig bzw. eine der anderen genannten Verbindungsmethoden verbunden sein. Beispielsweise können die Seitenwände 19, 20 ein Formschlusselement oder mehrere Formschlusselemente aufweisen. Das zumindest eine Formschlusselement kann ein Vorsprung sein, der eine Seitenfläche (bzw. Mantelfläche) der jeweiligen Seitenwand 19, 20 in Richtung auf die Rückwand 17 vorspringend überragt und in einer der Form (dem Querschnitt) des Formschlusselementes angepassten Ausnehmung der Rückwand 17 aufgenommen ist.

Die Seitenwände 19, 20 können die Rückwand 17 nach oben überragend ausgebildet sein. In einer Ausführungsvariante der Traktionshilfe 4 kann vorgesehen sein, dass die Seitenwände 19, 20 des Anbindungsabschnitts 16 mit abgewinkelten Abschnitten 22 ausgebildet sind, wobei sich die abgewinkelten Abschnitte 22 bis auf die Oberfläche des Auflageelements 6 erstrecken, auf der das Traktionselement 7 angeordnet ist. Die Seitenwände 19, 20 können also als Winkelelemente ausgebildet sein, insbesondere rechtwinkelig ausgebildet sein.

Die Abschnitte 22 können stoffschlüssig und/oder formschlüssig bzw. eine der anderen genannten Verbindungsmethoden mit dem Auflageelement 6 verbunden sein.

Nach einer weiteren Ausführungsvariante der Traktionshilfe 4 kann vorgesehen sein, dass die Seitenwände 19, 20 in jeweils eine Ausnehmung in einer Endfläche 24 des Auflageelements 6 eingreifend angeordnet sind, beispielsweise formschlüssig aufgenommen sind.

Die Vorderwand 18 kann plattenförmig ausgebildet sein. Sie kann stoffschlüssig und/oder formschlüssig bzw. eine der anderen genannten Verbindungsmethoden mit dem Auflageelement 6 und/oder den Seitenwänden 19, 20 verbunden sein. Der Formschluss kann in einer Art Zinkenverbindung ausgebildet sein, wozu an den Seitenwänden 19, 20 zumindest ein als Vorsprung ausgebildetes Formschlusselement 25 angeordnet sein kann, das eine Seitenfläche (bzw. Mantelfläche) der jeweiligen Seitenwand 19, 20 in Richtung auf die Vorderwand 18 vorspringend überragt und in einer der Form (dem Querschnitt) des Formschlusselementes angepassten Ausnehmung der Vorderwand 18 aufgenommen ist.

Es kann weiter vorgesehen sein, dass das Auflageelement 6 eine Abdeckung 26 des Anbindungsabschnittes 16 bildet. Dazu kann das Auflageelement 6 entsprechende Verlängerungen in den Endbereichen 11, 12 aufweisen, die sich in die Bereiche zwischen den Seitenwänden 19, 20 erstrecken. Diese Abdeckungen 26 dienen auch der Abstützung von Verbindungselementen 27, mit denen die Winkelelemente 14, 15 mit den Anbindungsabschnitten 16 verbunden werden können, insbesondere gespannt werden können. Die Verbindungselemente 27 sind insbesondere Schrauben, können aber auch durch andere geeignete Elemente gebildet sein. Schrauben haben jedoch den Vorteil, dass damit die Vorspannung, mit der die Traktionshilfe 4 auf die Raupenkette 1 gespannt wird, relativ einfach eingestellt werden kann. Zudem ist damit auch der voranstehend erwähnte Höhenausgleich bei unterschiedlichen Raupenketten 1 einfach realisierbar. Zur Vereinfachung des Spannens sind die Verbindungselemente 27, insbesondere die Schrauben, bevorzugt von oben bedienbar, d.h. dass beispielsweise der Schraubenkopf auf der gleichen Seite der Traktionshilfe 4 angeordnet ist, wie das Traktionselement 7. Die Schrauben werden also vorzugsweise von oben nach unten eingesetzt und verschraubt, wie dies z.B. aus den Figuren ersichtlich ist. Es kann ein Verbindungselement 27 pro Winkelelement 14, 15 oder können mehrere Verbindungselemente 27 pro Winkelelement 14, 15 angeordnet sein.

Vorzugsweise durchdringen die Verbindungselemente 27 entsprechende Durchbrüche im Auflageelement 6 und reichen bis in mit einem Innengewinde versehene Bohrungen in den Winkelelementen 14, 15. Die Schrauben können auch mit einem teilweise glatten Schaft ausgebildet sein, womit eine Verschmutzung des Gewindes besser vermieden werden kann.

Es sind auch Schraube/Mutter Verbindungen zwischen Anbindungsabschnitt 16 und Winkelelement 14, 15 ausbildbar, wozu die Schrauben die Winkelelemente 14, 15 durchdringend angeordnet sein können.

Die Winkelelemente 14, 15 weisen einen Verbindungsschenkel 28 und einen Anlageschenkel 29 auf.

Die Winkelelemente 14, 15 können einstückig ausgeführt sein, vorzugsweise bilden der Verbindungsschenkel 28 und der Anlageschenkel 29 aber gesonderte Teile, die miteinander verbunden sind. Die Verbindung erfolgt insbesondere stoffschlüssig, kann aber auch (gegebenenfalls zusätzlich dazu) mit einer der anderen voranstehend genannten Verbindungsmethoden erfolgen.

Der Verbindungsschenkel 28 kann plattenförmig ausgebildet sein. Der Verbindungsschenkel 28 dient der Aufnahme des zumindest einen Verbindungselementes 27, insbesondere der Schraube, und dem Einschieben in den Anbindungsabschnitt 16 bzw. der überlappenden Anordnung mit dem Anbindungsabschnitt 16.

Der Anlageschenkel 29 dient der Anlage der Traktionshilfe 4 an der Unterseite der Raupenkette 1. Mit anderen Worten wird mit dem Anlageabschnitt 29 bzw. mit dem Winkelelement 14 bzw. 15 insgesamt zusammen mit dem Anbindungsabschnitten16 das seitliche Umgreifen und das Untergreifen der Raupenkette 1 erreicht. Mit dem Anlageschenkel 29 wird ein U-förmiger Aufnahmebereich für die Raupenkette 1 ausgebildet.

In der einfachsten Ausführungsvariante ist der Anlageschenkel 29 als ebenes Plattenelement ausgebildet. Gemäß einer anderen und in den Figuren dargestellten Ausführungsvariante der Traktionshilfe 4 kann vorgesehen sein, dass der Anlageschenkel 29 für die Anlage an der Raupenkette 1 eine an die Raupenkette 1 anlegebare Anlagefläche 30 aufweist, die eine konvexe Wölbung aufweist. Vorzugsweise ist der gesamte Anlageschenkel 29 konvex gewölbt.

Zur Verstärkung des Winkelelementes 14 bzw. 15 kann nach einer weiteren Ausführungsvariante vorgesehen sein, dass an der Unterseite des Anlageschenkels 29 ein Verstärkungssteg 31 oder mehrere Verstärkungsstege 31 angeordnet ist/sind. Der Verstärkungssteg 31 oder mehrere Verstärkungsstege 31 können mit dem Verbindungsschenkel 28 verbunden sein, insbesondere mit zumindest einer der voranstehend genannten Methoden. Gemäß einer Ausführungsvariante dazu kann vorgesehen sein, dass die Aufnahmen für die Verbindungselemente 27 nicht als Sacklochbohrungen ausgeführt sind., sondern als Durchbrüche, die durch den gesamten Verbindungsschenkel 27 hindurchragen, wie dies aus Fig. 7 ersichtlich ist. Es kann dabei vorgesehen sein, dass die Verstärkungsstege 31 in diese Durchbrüche eingeschoben sind. Damit können die Verstärkungsstege 31 gleichzeigt einen Verschluss für die Durchbrüche bilden und somit einer Verschmutzung der Durchbrüche im Inneren vorbeugen.

Der Verbindungsschenkel 28 und der Anlageschenkel 29 können rechtwinkelig zueinander oder spitzwinkelig zueinander angeordnet sein. Entsprechend einer Ausführungsvariante der Traktionshilfe 4 kann aber vorgesehen sein, dass das zumindest eine Winkelelement 14 oder 15 einen Winkel 32 zwischen den winkelig zueinander angeordneten Abschnitten, also zwischen dem Verbindungsschenkel 28 und dem Anlageschenkel 29, aufweist, der größer als 90 ° und kleiner als 110 ° ist.

Entsprechend einer anderen, in Fig. 9 dargestellten Ausführungsvariante der Traktionshilfe 4 kann vorgesehen sein, dass das zumindest eine lösbar verbundene Winkelelement 14 oder 15 einen hülsenförmigen Abschnitt 33 aufweist, in den der Anbindungsabschnitt 16 eingeschoben ist. Der hülsenförmige Abschnitt 33 kann dabei den Verbindungsschenkel 28 bilden. Dieser hülsenförmige Abschnitt 33 kann mehrteilig oder vorzugsweise einteilig als Hohlprofil ausgebildet sein. Der Anbindungsabschnitt 16 kann bei dieser Ausführungsvariante als einfaches Plattenelement gebildet sein. Zur Verbindung des Winkelelementes 14 bzw. 15 kann der Anbindungsabschnitt 16 zumindest einen Durchbruch aufweisen, durch den das Verbindungselement 27 hindurchragt. Die Verbindung (Verschraubung) kann mit dem Anlageschenkel 29 erfolgen, wozu dieser zumindest eine Bohrung mit einem Innengewinde aufweisen kann. Eine Verschraubung mit einer unten an dem Anlageschenkel 29 anliegenden Schraubmutter ist ebenfalls möglich.

Für den Breitenausgleich bzw. für eine Anpassung an unterschiedliche Breiten 9 von Raupenketten 1 kann gemäß einer Ausführungsvariante vorgesehen sein, dass das Auflageelement 6 zwei miteinander verbundene und in einer Längsrichtung (der Längserstreckung 8 in Fig. 1) des Auflageelements 6 relativ zueinander verschiebbare Auflageelementteile 34, 35 aufweist, wie dies in Fig. 10 ausschnittsweise dargestellt ist. Die beiden Auflageelementteile 34, 35 können miteinander einen Überlappstoß 36 ausbilden. Im Überlappstoß 36 sind die beiden Auflageelementteils 34, 35 miteinander verbunden, beispielsweise verschraubt. Zur Längenänderung ist bei dieser Ausführungsvariante zumindest in einem der beiden Auflageelementteile 34, 35 zumindest ein Langloch ausgebildet, durch den das Verbindungselement, beispielsweise die Schraube, hindurchragt.

Nach einer weiteren Ausführungsvariante der Traktionshilfe 4 kann vorgesehen sein, dass auf der Anlagefläche 30 des Anlageschenkels 29 reibungserhöhende Strukturelemente 38 angeordnet bzw. ausgebildet sind, um damit bei der Klemmung der Raupenkette 1 einen Formschluss mit dem Anlageschenkel 29 auszubilden, wenn die Raupenkette 1 in diesem Bereich eine weiche Oberfläche, beispielsweise eine Gummioberfläche, aufweist. Die über die Anlagefläche 30 vorragenden Strukturelemente 38 können durch eine entsprechende Oberflächenstrukturierung der Anlagefläche 30 einteilig mit dieser ausgebildet sein. Die Strukturelemente 38 können aber auch durch eine Beschichtung der Anlagefläche 30 bereitgestellt werden. Die Beschichtung kann beispielsweise kunstharzbasiert sein, wobei in diese Beschichtung Hartpartikel, z.B. Korund oder Diamantpartikel, eingelagert sein können, die über die Beschichtung vorragen. Anstelle eines Kunstharzes kann auch eine metallische Matrix, z.B. eine Nickelmatrix, eingesetzt werden.

Derartige Strukturelemente 38 können auch an anderen Oberflächen der Traktionshilfe 4, beispielsweise auf der Unterseite des Anlageelements 6, vorgesehen sein.

Zur Montage der Traktionshilfe 4 auf der Raupenkette 1 wird zunächst das Auflageelement 6 auf die Raupenkette 1 aufgelegt. Danach wird das zumindest eine Winkelelement 14 oder 15 oder werden die beiden Winkelelement 14, 15 in die Anbindungsabschnitte 16 eingeschoben oder auf die Anbindungsabschnitte 16 aufgeschoben und mittels der Verbindungselemente 27 fixiert und festgespannt bzw. geklemmt.

Ergänzend zum Traktionselement 7 können für besonders harte Winterbedingungen Eiskrallen vorgesehen werden. Diese Eiskrallen können beispielsweise plattenförmig ausgebildet sein, und an ihrem vorderen Ende mit zu den Erhebungen des Traktionselementes 7 ähnlichen Erhebungen ausgebildet sein. Die Eiskrallen können zumindest annähernd orthogonal zum Traktionselement 7 angeordnet sein.

Es besteht weiter die Möglichkeit, dass auf dem Auflageelement 6 mehr als ein Traktionselement 7 angeordnet wird, beispielsweise zwei nebeneinander verlaufende stegförmige Traktionselemente 7.

Die Ausführungsbeispiele zeigen bzw. beschreiben mögliche Ausführungsvarianten der Traktionshilfe 4, wobei an dieser Stelle bemerkt sei, dass auch Kombinationen der einzelnen Ausführungsvarianten untereinander möglich sind.

Der Ordnung halber sei abschließend darauf hingewiesen, dass zum besseren Verständnis des Aufbaus der Traktionshilfe 4 diese bzw. deren Bestandteile nicht zwingenderweise maßstäblich dargestellt sind.

### Bezugszeichenaufstellung

- 1: Raupenkette
- 2: Profilierung
- 3: Steg
- 4: Traktionshilfe
- 5: Abstand

- 6: Auflageelement
- 7: Traktionselement
- 8: Längserstreckung
- 9: Breite
- 10: Mittelbereich

- 11: Endbereich
- 12: Endbereich
- 13: Erhebung
- 14: Winkelelement
- 15: Winkelelement

- 16: Anbindungsabschnitt
- 17: Rückwand
- 18: Vorderwand
- 19: Seitenwand
- 20: Seitenwand

- 21: Formschlusselement
- 22: Abschnitt
- 23 24: Endfläche
- 25: Formschlusselement

- 26: Abdeckung
- 27: Verbindungselement
- 28: Verbindungsschenkel
- 29: Anlageschenkel
- 30: Anlagefläche

- 31: Verstärkungssteg
- 32: Winkel
- 33: Abschnitt
- 34: Auflageelementteil
- 35: Auflageelementteil

- 36: Überlappstoß
- 37: Langloch
- 38: Strukturelement

## Patentansprüche

1. Traktionshilfe (4) für eine Maschine mit einer Raupenkette (1), umfassend ein Auflageelement (6), auf dem ein Traktionselement (7) angeordnet ist, wobei an dem Auflageelement (6) zumindest ein erstes Winkelelement (14) und zumindest ein zweites Winkelelement (15) angeordnet sind, die jeweils einen Verbindungsschenkel (28) und einen Anlageschenkel (29) aufweisen, wobei zumindest eines der beiden Winkelelemente (14, 15) mit dem Auflageelement (6) lösbar verbunden ist, wozu das Auflageelement (6) einen Anbindungsabschnitt (16) aufweist, **dadurch gekennzeichnet, dass** das zumindest eine lösbar verbundene Winkelelement (14, 15) und das Auflageelement (6) im Verbindungsbereich einander überlappend angeordnet sind, und dass der Anbindungsabschnitt (16) hülsenförmig ausgebildet ist und dass das zumindest eine lösbar verbundene Winkelelement (14, 15) in den Anbindungsabschnitt (16) eingeschoben ist, oder dass das zumindest eine lösbar verbundene Winkelelement (14,15) einen hülsenförmigen Abschnitt (33) aufweist, in den der Anbindungsabschnitt (16) eingeschoben ist, wobei dieser hülsenförmige Abschnitt (33) den Verbindungsschenkel (28) des Winkelelements (14, 15) bildet.

2. Traktionshilfe (4) nach Anspruch 1, **dadurch gekennzeichnet, dass** das erste oder das zweite Winkelelement (14, 15) einstückig mit dem Auflageelement (6) ausgebildet ist.

3. Traktionshilfe (4) nach Anspruch 1 oder 2, **dadurch gekennzeichnet, dass** das Auflageelement (6) zwei miteinander verbundene und in einer Längsrichtung des Auflageelements (6) relativ zueinander verschiebbare Auflageelementteile (34, 35) aufweist.

4. Traktionshilfe (4) nach einem der Ansprüche 1 bis 3, **dadurch gekennzeichnet, dass** das zumindest eine Winkelelement (14, 15) einen Anlageschenkel (29) für die Anlage an der Raupenkette (1) aufweist, wobei eine an die Raupenkette (1) anlegebare Anlagefläche (30) des Anlageelements (29) eine konvexe Wölbung aufweist.

5. Traktionshilfe (4) nach einem der Ansprüche 1 bis 4, **dadurch gekennzeichnet, dass** zwei einander gegenüberliegende Seitenwände (19, 20) des Anbindungsabschnitts (16) mit abgewinkelten Abschnitten (22) ausgebildet sind, wobei sich die abgewinkelten Abschnitte (22) bis auf die Oberfläche des Auflageelements (6) erstrecken, auf der das Traktionselement (7) angeordnet ist.

6. Traktionshilfe (4) nach einem der Ansprüche 1 bis 5, **dadurch gekennzeichnet, dass** das zumindest eine Winkelelement (14, 15) einen Winkel (32) wischen den winkelig zueinander angeordneten Abschnitten aufweist, der größer als 90 ° und kleiner als 110 ° ist.

7. Traktionshilfe (4) nach einem der Ansprüche 1 bis 6, **dadurch gekennzeichnet, dass** beide Winkelelemente (14, 15) gleich ausgebildet sind und das Auflageelement (6) zwei Anbindungsabschnitte (16) aufweist.

8. Raupenkette (1) für eine Maschine, die eine Oberseite aufweist, die bevorzugt eine Profilierung (2) mit Erhebungen aufweist, sowie mit zumindest einer Traktionshilfe (4), die auf der Oberseite, bevorzugt zwischen zwei Erhebungen der Profilierung (2), angeordnet ist, **dadurch gekennzeichnet, dass** die Traktionshilfe (4) nach einem der Ansprüche 1 bis 7 gebildet ist.

## Claims

1. A traction aid (4) for a machine with a continuous track (1), comprising a support element (6) on which a traction element (7) is arranged, wherein at least one first angle element (14) and at least one second angle element (15) are arranged on the support element (6), which angle elements (14, 15) each have a connecting leg (28) and a contact leg (29), wherein at least one of the two angle elements (14, 15) is detachably connected to the support element (6), for which purpose the support element (6) has a connecting section (16), **characterized in that** the at least one detachably connected angle element (14, 15) and the support element (6) are arranged overlapping one another in the connecting region, and that the connecting section (16) is sleeve-shaped and that the at least one detachably connected angle element (14, 15) is inserted into the connecting section (16), or that the at least one detachably connected angle element (14, 15) has a sleeve-shaped section (33) into which the connecting section (16) is inserted, wherein this sleeve-shaped section (33) forms the connecting leg (28) of the angle element (14, 15).

2. The traction aid (4) according to claim 1, **characterized in that** the first or the second angle element (14, 15) is formed in one piece with the support element (6).

3. The traction aid (4) according to one of claims 1 or 2, **characterized in that** the support element (6) has two support element parts (34, 35) which are connected to each other and can be displaced relative to each other in a longitudinal direction of the support element (6).

4. The traction aid (4) according to one of claims 1 to 3, **characterized in that** the at least one angle element (14, 15) has a contact leg (29) for contact with the continuous track (1), wherein a contact surface (30) of the contact element (29) which can be placed against the continuous track (1) has a convex curvature.

5. The traction aid (4) according to one of claims 1 to 4, **characterized in that** two mutually opposite lateral walls (19, 20) of the connection section (16) are formed with angled sections (22), wherein the angled sections (22) extend up to the surface of the support element (6) on which the traction element (7) is arranged.

6. The traction aid (4) according to one of claims 1 to 5, **characterized in that** the at least one angle element (14, 15) has an angle (32) between the sections arranged at an angle to one another which is greater than 90 ° and less than 110 °.

7. The traction aid (4) according to one of claims 1 to 6, **characterized in that** both angle elements (14, 15) are configured equally and the support element (6) has two connecting sections (16).

8. A continuous track (1) for a machine, which has an upper side, which preferably has a profiling (2) with elevations, and with at least one traction aid (4), which is arranged on the upper side, preferably between two elevations of the profiling (2), **characterized in that** the traction aid (4) is formed according to one of claims 1 to 7.

## Revendications

1. Aide à la traction (4) pour une machine munie d'une chenille (1), comprenant un élément d'appui (6) sur lequel est agencé un élément de traction (7), dans laquelle au moins un premier élément d'angle (14) et au moins un deuxième élément d'angle (15), présentant respectivement une branche de liaison (28) et une branche de montage (29), sont agencés sur l'élément d'appui (6), dans laquelle au moins un des deux éléments d'angle (14, 15) est relié de manière amovible à l'élément d'appui (6), ce pour quoi l'élément d'appui (6) présente une section de raccordement (16), **caractérisée en ce que** le au moins un élément d'angle (14, 15) relié de manière amovible et l'élément d'appui (6) sont agencés de manière à se chevaucher dans la région de liaison, et **en ce que** la section de raccordement (16) est réalisée en forme de manchon et **en ce que** le au moins un élément d'angle (14, 15) relié de manière amovible est inséré dans la section de raccordement (16), ou **en ce que** le au moins un élément d'angle (14, 15) relié de manière amovible présente une section en forme de manchon (33) au sein de laquelle est insérée la section de raccordement (16), dans laquelle ladite section en forme de manchon (33) forme la branche de liaison (28) de l'élément d'angle (14, 15).

2. Aide à la traction (4) selon la revendication 1, **caractérisée en ce que** le premier ou le deuxième élément d'angle (14, 15) est réalisé d'une seule pièce avec l'élément d'appui (6).

3. Aide à la traction (4) selon la revendication 1 ou 2, **caractérisée en ce que** l'élément d'appui (6) présente deux parties d'élément d'appui (34, 35) reliées l'une à l'autre et pouvant être déplacées l'une par rapport à l'autre dans une direction longitudinale de l'élément d'appui (6).

4. Aide à la traction (4) selon l'une quelconque des revendications 1 à 3, **caractérisée en ce que** le au moins un élément d'angle (14, 15) présente une branche de montage (29) destinée au montage sur la chenille (1), dans laquelle une surface de montage (30) de l'élément de montage (29) pouvant être mise en place au niveau de la chenille (1) présente une courbure convexe.

5. Aide à la traction (4) selon l'une quelconque des revendications 1 à 4, **caractérisée en ce que** deux parois latérales (19, 20) opposées de la section de raccordement (16) sont réalisées de manière à présenter des sections coudées (22), dans laquelle les sections coudées (22) s'étendent jusqu'à la surface de l'élément d'appui (6) sur laquelle est agencé l'élément de traction (7).

6. Aide à la traction (4) selon l'une quelconque des revendications 1 à 5, **caractérisée en ce que** le au moins un élément d'angle (14, 15) présente un angle (32), qui est supérieur à 90° et inférieur à 110°, entre les sections agencées de manière à présenter un angle les unes par rapport aux autres.

7. Aide à la traction (4) selon l'une quelconque des revendications 1 à 6, **caractérisée en ce que** les deux éléments d'angle (14, 15) sont réalisés de manière identique et l'élément d'appui (6) présente deux sections de raccordement (16).

8. Chenille (1) destinée à une machine, présentant une face supérieure qui présente de manière préférée un profilage (2) avec des protubérances, et comprenant au moins une aide à la traction (4) agencée sur la face supérieure, de manière préférée entre deux protubérances du profilage (2), **caractérisée en ce que** l'aide à la traction (4) est réalisée selon l'une quelconque des revendications 1 à 7.
